# EUROPEAN PATENT APPLICATION

(11) **EP 4 755 692 A1**
(43) Date of publication of application: **10.06.2026**
(21) Application number: 25221085.1
(22) Date of filing: 05.12.2025
(51) Int. Cl.: B60L 1/00, B60K 6/405, B60L 53/22, H02B 1/56, B60L 1/02, B60L 50/50, B60L 53/20

(54) **MODULAR POWER DISTRIBUTION UNIT COMPRISING A SHARED COOLING PANEL**

(30) Priority: 06.12.2024 NL 2039263
(71) Applicant: DAF Trucks N.V., 5643 TW Eindhoven (NL)
(72) Inventor: BARATZADEH, Behnam, 5643 TW Eindhoven (NL); VAN DE VELDE, Giliam, 5643 TW Eindhoven (NL); MINGORANCE, Remei, 5643 TW Eindhoven (NL)
(74) Representative: V.O.

(57) **Abstract**

The present document relates to a power distribution unit for distributing electrical power in an electrically powered vehicle. The power distribution unit comprises a first module and a second module, wherein the first module comprises a first number of high voltage electric components electrically connected to one or more high voltage power circuits, and the second module comprises a second number of high voltage electric components electrically connected to one or more high voltage power circuits. The first number of high voltage electric components are common to a variety of vehicle types, and the second number of high voltage electric components are specific to a vehicle type. The second module is contiguous to the first module along a contact surface of the first module and a contact surface of the second module, wherein the first module comprises a cooling panel for dissipating heat from the high voltage electric components, the cooling panel forming the contact surface of the first module. The cooling panel is in thermal contact with at least a number of the high voltage electric components of the first module, and at least a number of the high voltage electric components of the second module are in thermal contact with the cooling panel via a contiguous contact between the high voltage electric components of the second module and the contact surface of the second module.

## Description

### Field of the invention

The present invention is directed at a power distribution unit for distributing electrical power in an electrically powered vehicle, the power distribution unit comprising a first and a second module which both comprise high voltage electric components electrically connected to high voltage power circuits.

### Background

High Voltage Power Distribution Modules (HV-PDMs) are critical components in electrical systems, particularly in electrically powered vehicles in the automotive industry, but also in electrical systems in aerospace and energy. They serve to efficiently distribute high voltage power to various subsystems and components within an electrical architecture, while protecting the system from overloads, short circuits, and other electrical faults.

HV-PDMs can vary greatly due to the specific power requirements, system architectures and safety standards of different vehicles. Such variations complicate mass production and make it expensive. For example, cooling elements typically added in or around the HV-PDMs to dissipate heat generated by the electronics housed inside the modules have to be adapted to the size and power requirements of the vehicle, because the currents drawn by the electronics and therefore the amount of generated heat scales with these parameters. There is thus a need for an HV-PDM that simultaneously is highly cost-efficient to produce and suitable for a large range of vehicles.

A modular power distribution system is known from DE 102019006155 A1. The power distribution system has an energy distribution unit that can be connected with plug-in modules, which may contain various system components like batteries, electric motors and safety features. The energy distribution unit comprises cooling channels.

### Summary of the invention

It is an object of the present invention to provide a power distribution unit that overcomes the abovementioned drawbacks, and which is highly cost-efficient to produce while being suitable for a large range of vehicles.

To this end, there is provided herewith a power distribution unit for distributing electrical power in an electrically powered vehicle, wherein the power distribution unit comprises a first module and a second module, wherein the first module comprises a first number of high voltage electric components electrically connected to one or more high voltage power circuits, wherein the second module comprises a second number of high voltage electric components electrically connected to one or more high voltage power circuits, the first number of high voltage electric components being common to a variety of vehicle types, and the second number of high voltage electric components being specific to a vehicle type, wherein the first module comprises a cooling panel for dissipating heat from the high voltage electric components, wherein the cooling panel is contiguous to a contact surface of a wall of the second module, wherein at least a number of the high voltage electric components of the first module are provided on a mounting face of the cooling panel for establishing thermal contact between the high voltage electric components of the first module and the cooling panel, and wherein at least a number of the high voltage electric components of the second module are provided on the wall of the second module for establishing thermal contact between the high voltage electric components of the second module and the cooling panel.

High voltage power distribution units comprise high voltage electric components electrically connected to high voltage power circuits which are present for a variety of purposes. In order to fulfill these purposes, some of these circuits need to scale in number and/or size depending on the vehicle type, while other circuits are more or less uniform across vehicle types and do not need to scale in this way. The present invention divides the power distribution unit into a first module and a second module. The first module is in fact a universal or base module, which is the same across vehicle types. The second module is a scalable, system-specific module, which is tailored to the specific vehicle. This division in the power distribution unit allows the first module to be made maximally uniform in terms of shape, size and the number of high voltage electric components it houses. The invention therefore enables to mass-produce this part of the power distribution unit with no significant variation for every vehicle. This significantly simplifies the production process and makes the power distribution unit much more cost-efficient to produce. This is achieved without sacrificing suitability of the power distribution unit for specific vehicles, because the second module according to the invention can be scaled and otherwise varied to optimally fulfill the requirements of a specific vehicle type. The second module may for example be larger dependent on the amount of high voltage electric components it is required to house. Moreover, the cooling panel is part of the first module, but it is suitable for being shared with second modules intended for a variety of vehicle types. In use, the first module and the second module are contiguous along the cooling panel of the first module and a contact surface of a wall of the second module. The cooling panel is therefore not only in thermal contact with the electric components in the first module, which are provided on the mounting face of the cooling panel inside the first module, but also in thermal contact with the electric components in the second module. The substantial contact surface used to cool the electric components in both the first module and in the second module makes the cooling panel suitable for cooling second modules for a variety of vehicle types. In addition to greatly simplifying production through the uniformity of the first module, the power distribution unit according to the invention is therefore also highly versatile. Moreover, the modular nature of the power distribution unit according to the invention also enhances ease of maintenance and reduces the time required for assembly of the unit. In particular, the fact that the power distribution unit is formed by attaching the first, base module to the second, scalable module along the cooling panel and the contact surface of the wall of the second module simplifies assembly and disassembly and enables these to be performed significantly more quickly. The high voltage electric components may include transistors such as insulated gate bipolar transistors and field-effect transistors, capacitors, inductors, diodes, transformers, resistors, relays and switches. These components are electrically connected to high voltage power circuits that serve a variety of purposes.

In accordance with some embodiments of the invention, the first number of high voltage electric components include at least one of: electric auxiliary components and vehicle charging components. In the specification, charging components may be electrical components that are part of a charging circuit, in particular a charging circuit configured for receiving electrical energy from an external energy source for charging a power supply of the vehicle. The first number of high voltage electric components are common to a variety of electric vehicle types, including heavy-duty battery electric vehicles, medium-duty battery electric vehicles, and plug-in hybrid electric vehicles. In some embodiments, the first number of high voltage electric components include electric auxiliary components, including for example vehicle thermal management components, battery thermal management components, vehicle suspension electric components and/or electric power steering components. These components may respectively be part of vehicle thermal management circuits for thermal management of the vehicle, battery thermal management circuits for thermal management of vehicle power supplies, vehicle suspension circuits for supporting suspension of the vehicle or electric power steering circuits for electrically assisting in steering of the vehicle. These components are fixed or vary only to a low degree depending on the vehicle type and may therefore be advantageously housed in the first module without loss of uniformity. In some of these embodiments, the vehicle charging components include components electrically connected to charging systems for charging the vehicle power supply, including for example charging systems that support common charging standards, such as megawatt charging systems, combined charging systems, Charge de Move systems, and/or guóbia̅o/tui̅jiàn systems. The combined charging systems may enable support of both AC and DC charging in the vehicle. Due to the commonality of these charging components across various vehicle types, the presence of these components in the first module provide it with a versatile way of facilitating charging capabilities to electrically powered vehicles of the various types. Moreover, in embodiments where charging components are part of a charging system that adheres to commonly used charging standards, the uniformity of the first module is further improved.

In accordance with some embodiments of the invention, the second number of high voltage electric components include secondary charging systems such as a megawatt charging system, combined charging systems or ChadeMo systems , specific to the vehicle type. This has the advantage that high secondary high power charging systems may share the cooling system of the first module. The further vehicle charging components may additionally or alternatively include components electrically connected to charging systems that support common charging standards, such as guóbia̅o/tui̅jiàn systems as known in the art. The second number of high voltage electric components are specific to the vehicle type of the vehicle in which the power distribution unit is applied. Based on how large the vehicle system is, the vehicle may for example have multiple batteries, resulting in a correspondingly higher number of battery components in the power distribution module. Battery components may be electric components that are part of circuitry in the vehicle for distributing electrical energy stored in the power supply of the vehicle to the various power circuits. Due to their specificity with respect to the vehicle type, battery components may be advantageously housed in the second module. Other components, such as the electric drive components for supporting electric drive systems, may similarly scale in number and/or in the size of the module that is needed to house the components. These high voltage electric components are therefore advantageously housed in the second module, which can be customized depending on the specific needs in a vehicle type, while keeping the first module uniform. In some of these embodiments, the second number of high voltage electric components include further vehicle charging components, such as on-board charging components electrically connected to an on-board charging system. By providing the second module with components that vary depending on the vehicle type in which the power distribution unit is implemented, the power distribution unit can be customized to the requirements of specific vehicles without the need for altering the first module. This helps maintain uniformity and allows the power distribution unit to be produced more cost-efficiently.

In accordance with some embodiments of the invention, the first module further comprises a number of low voltage electric components electrically connected to one or more low voltage power circuits. In accordance with some embodiments of the invention, the first module further comprises an electrical control unit, wherein the electrical control unit is configured for controlling the distributing of electrical power in the electrically powered vehicle. A control unit may be present in many power distribution units, and variation of the power distribution unit may be minimized by including the control unit in the first module.

In accordance with some embodiments of the invention, the first module is provided with an interface for interconnecting high voltage power circuits and/or low voltage power circuits. Signals, such as communication signals for controlling power distribution within the power distribution unit, may travel between the first module and the second module through the interface. In some embodiments, the interface establishes the connection between the first module upon the two modules being attached along their respective contact surfaces. Furthermore, some of the high voltage power circuits in the second module may need to be connected to electric systems of the vehicle exterior to the power distribution unit via connectors of the first module. This may also be facilitated by the interface. The contact surfaces may therefore advantageously be provided with interconnection terminals for establishing the connection. By providing such terminals on or near the contact surfaces of the two modules, a substantial part of the circuitry in the two modules is advantageously brought in close proximity to the cooling panel, because that part of the circuitry is routed close to the terminals. This facilitates heat exchange between the cooling panel and the electric components and thereby improves the cooling function of the cooling panel. Alternatively, such terminals may be provided on another part of the first module and another part of the second module. For example, providing the interface on the outside of the power distribution unit makes the interface more accessible to technicians if it becomes necessary to operate on the power distribution unit.

In accordance with some embodiments of the invention, the interface is provided on the cooling panel, wherein the interface comprises interconnection parts configured for cooperating with complementary interconnection parts of the second module, such as to establish the interconnection between the high voltage power circuits and/or low voltage power circuits of the first module and of the second module. Any electric components used for facilitating signal travel between the two modules via the interface is hereby positioned at or near the cooling panel. The cooling panel in these embodiments therefore cools the interface and the high voltage electric components it is connected to especially efficiently. The interface may for example be provided with terminals or sockets, while the second module may be provided with plugs or connectors complementary to the interconnection parts on the first module. Attaching the first module and the second module for forming the power distribution unit in these embodiments therefore simultaneously establishes thermal contact between the cooling panel and the second module, and electronic contact between the two modules. Although in alternative embodiments an electronic connection between the two modules may be otherwise provided, these embodiments advantageously allow the power distribution unit to be kept more compact, such that less space is required in a vehicle for the power distribution unit to be installed. The cooling panel may be provided with cooling channels for permitting a cooling fluid to pass through the cooling channel for cooling the electric components in the first module and in the second module of the power distribution unit. In those embodiments, the cooling channels are routed around the interface, such that the connection between the first module and the second module can be facilitated by the interface without disturbing or disabling the functioning of the cooling panel.

In accordance with some embodiments of the invention, the first module comprises a voltage converter, the voltage converter being configured for converting between a high voltage suitable for the high voltage electric components and a low voltage suitable for low voltage electric components. By converting between high voltages from high voltage electric components and low voltages from low voltage electric components, the power distribution unit according to these embodiments can conveniently supply electrical power to components electrically connected to high voltage power circuits and to components electrically connected to low voltage power circuits. This facilitates supporting functionalities in the vehicle which use high voltages, such as electric drive systems, brake resistor systems and electric power take-off systems, but also facilitates supporting functionalities which use low voltages.

In accordance with some embodiments of the invention, at least one of the first module and the second module comprises high voltage connectors for electrically connecting the high voltage power circuits of the first module and/or of the second module to the vehicle. For example, only the second module may comprise such high voltage connectors. In those embodiments, the high voltage power circuits of the first module would be connected to the vehicle indirectly via the high voltage connectors of the second module. However, in some alternative embodiments, both modules may comprise such high voltage connectors and the high voltage power circuits of the two modules may be connected to the vehicle directly via connectors of the two respective modules.

In accordance with some embodiments of the invention, the high voltage power circuits comprise busbars in the first module and in the second module, the busbars being configured for delivering electrical current from a power source of the vehicle to the high voltage power circuits, wherein the busbars are routed in the first module to run along the cooling panel, and wherein the busbars are routed in the second module to run along the contact surface of the second module. The busbars reliably and efficiently deliver electrical current to the high voltage power circuits. At the same time, the electrical current through the busbars significantly contributes to the heat generated inside the power distribution unit. The routing of the busbars in the first module along the cooling panel is therefore advantageous, because such routing brings the busbars in direct thermal contact with the cooling panel, which significantly contributes to the cooling of the first module. Moreover, since the busbars in the second module are routed along the contact surface of the second module in these embodiments, the busbars of the second module are likewise brought into thermal contact with the cooling panel. This routing of the busbars therefore advantageously contributes to the optimization of the cooling function in the power distribution unit.

In accordance with some embodiments of the invention, the cooling panel comprises one or more channels for permitting a cooling fluid to flow through the cooling panel. As heat from the electric components in the power distribution module is absorbed by the cooling panel, the cooling panel itself will rise in temperature. Once the cooling panel reaches thermal equilibrium in the power distribution unit, the cooling panel would otherwise cease to function. This is counteracted in these embodiments by a cooling fluid flowing through channels in the cooling panel. Such fluids may for example include: water, ethylene glycol or propylene glycol. A cooling fluid with a high heat capacity will then be able to efficiently absorb heat transferred from the high voltage electric components to the cooling panel, providing an efficient means of continually dissipating the heat generated in the power distribution unit.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a side-view scheme of connections between a power distribution unit in accordance with an embodiment of the invention and a number of high voltage power circuits.
Figure 2 schematically illustrates a first module and a second module of an embodiment of a power distribution unit in accordance with the invention.
Figure 3 schematically illustrates an inner face view scheme of a first module of a power distribution unit according to an embodiment of the invention.

### Detailed description

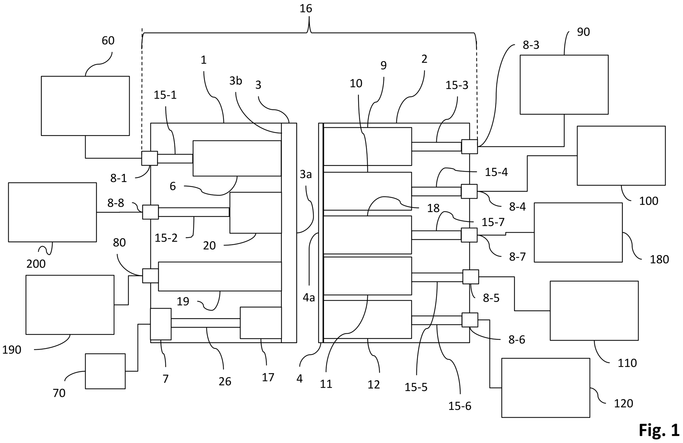

Figure 1 schematically illustrates a connection scheme of a power distribution unit 16 according to an embodiment of the invention, with a number of high voltage systems of an electrically powered vehicle. Power distribution unit 16 comprises a first module 1 and a second module 2. The first module 1 is in fact a universal or base module, which is the same across vehicle types. High voltage power distribution units in general house high voltage electric components electrically connected to high voltage power circuits which are present for a variety of purposes. The first module 1 houses high voltage electric components on the mounting face 3b of cooling panel 3, which do not scale in number or size based on the vehicle type, and can therefore be made maximally uniform across vehicle types. This simplifies the production of the power distribution unit 16 and thereby makes it more cost-effective. The second module 2 houses high voltage electric components electrically connected to high voltage power circuits which do scale in number and/or size based on the vehicle type. The second module 2 can therefore have various sizes or shapes in order to accommodate the components it is required to house. In use, the cooling panel 3 of the first module 1 and the wall 4 of the second module 2 are contiguous along contact surfaces 3a and 4a of respectively the cooling panel 3 and the wall 4. Because the two modules are attached to each other along contact surfaces, which on the side of the first module 1 is formed by the cooling panel 3, a convenient means is provided for cooling the high voltage electric components of both the first module 1 and of the second module 2. The high voltage electric components of the first module are in thermal contact with the cooling panel 3, and the high voltage electric components of the second module are in contact with the wall 4 of the second module. Since the wall 4 of the second module 2 is brought in contact with the cooling panel 3, the high voltage electric components of the second module 2 are thereby also brought into thermal contact with the cooling panel 3, such that the cooling panel 3 is shared by the first module 1 and the second module 2. In this embodiment, the high voltage power circuits of the power distribution unit are each shown to be connected to the various systems of the vehicles via separate connectors 8-1 - 8-8. However, in alternative embodiments, the high voltage power circuits and vehicle systems may be connected via shared connectors. The first module 1 comprises high voltage electric components 6 electrically connected to high voltage power circuits. The high voltage electric components 6 include charging components, which are electrically connected to a charging system 60 of the vehicle via high voltage connector 8-1. The charging system 60 may for example be a combined charging system, and/or may support the Charge de Move charging standard or another standard such as guóbia̅o/tui̅jiàn. The first module 1 in this figure may also comprise low voltage electric components 7 which may include a low voltage connector, and may further comprise low voltage busbars 26 for electrically connecting the voltage converter 17 (discussed below) to low voltage power circuits 70. The first module may further comprise an electrical control unit 19 configured for controlling the distribution of electrical power through the electric components of the power distribution unit 16. The electrical control unit 19 may for example continuously monitor the temperature of the power distribution unit 16 and dynamically adjust the electrical power delivered to various components. The electrical control unit 19 may be connected via e.g. a control area network (CAN) connector 80 to another electrical control unit 190 of the vehicle for exchanging data between electrical control unit 19 and the other or further electrical control unit 190. To convert between high voltages suitable and necessary for high voltage electric components, and low voltages for low voltage electric components, the first module 1 may further comprise a voltage converter 17. The first module 1 may further comprise low voltage busbars 26 and low voltage electric components 7, which may include a low voltage connector to connect to low voltage circuitry outside of the power distribution unit 16. The first module 1 in some embodiments includes electric auxiliary components 20, which are connected to electric auxiliary systems 200 via connector 8-8. The electric auxiliary components 20 connected to electric auxiliary systems 200 may for example include vehicle thermal management components electrically connected to vehicle thermal management systems, battery thermal management components electrically connected to battery thermal management systems, or vehicle suspension electric components electrically connected to vehicle suspension systems. The electric components of the first module 1 can be kept maximally uniform across vehicle types. This allows the first module 1 itself to be kept maximally uniform, which simplifies production and makes it more cost-efficient. The first module 1 is attached to the second module 2 and makes contiguous contact therewith along the cooling panel 3 of the first module 1. The cooling panel 3 serves to cool the high voltage electric components of both the first module 1 and of the second module 2. The high voltage electric components electrically connected to high voltage power circuits of the second module 2 for example include electric drive components 9. The electric drive components 9 are connected to an electric drive system 90 for propulsion of the vehicle via high voltage connector 8-3. The high voltage electric components in the second module 2 further include battery components 10, which are connected via high voltage connector 8-4 to the battery or batteries 100 of the vehicle. The high voltage electric components in the second module 2 further include brake resistor components 11, which are connected via high voltage connector 8-5 to a brake resistor system 110 for dissipating and capturing excess energy during regenerative braking. The high voltage electric components of the second module 2 further include power take-off components 12, which are connected via high voltage connector 8-6 to an electric power take-off system 120 of the vehicle for allowing the vehicle to electrically power equipment in the vehicle, such as hydraulic pumps. The high voltage electric components of the second module 2 in this embodiment further include further charging components 18, which are connected via high voltage connector 8-7 to a further charging system 180. The further charging system in some embodiments include a megawatt charging system or an on-board charging system, but may additionally or alternatively include other components electrically connected to charging systems that support common charging standards, such as combined charging systems, Charge de Move (CHAdeMO) systems, and/or guóbia̅o/tui̅jiàn systems known to the skilled person. In both the first module 1 and the second module 2, high voltage electric components are connected to the respective connectors 8-1- 8-8 via busbars 15-1 - 15-7, while other parts of the power distribution unit 16 such as low voltage electric components are connected separately from the busbars 15-1 - 15-7. The second module 2 comprises high voltage electric components that are specific to the vehicle type in which the power distribution unit 16 is applied. For example, the components may scale in number and/or size depending on the size or weight of the vehicle. Providing such components in the second module maintains the uniformity of the first module 1 and additionally makes the power distribution unit 16 highly versatile.

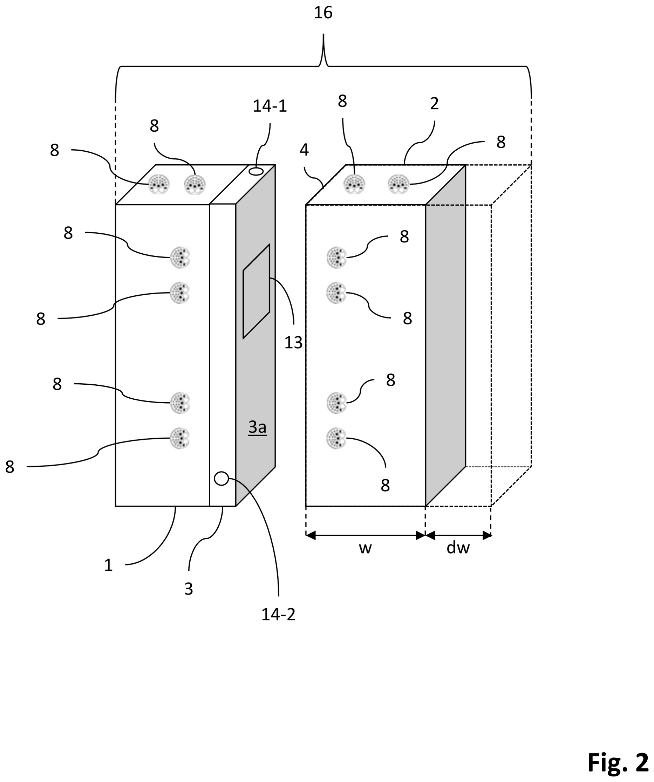

Figure 2 schematically illustrates an exterior of a first module 1 and of a second module 2 of a power distribution unit 16 in accordance with an embodiment of the invention. The second module 2, which houses high voltage electric components which scale in number and/or size based on the vehicle type in which the power distribution unit is implemented (see figure 1), can have various sizes or shapes in order to accommodate the components it is required to house. For example, the second module 2 may have a width w, but in alternative embodiments in which the second module 2 is required to house a larger number of high voltage electric components, the second module 2 may have some additional width dw. The second module 2 in other words can be scaled or otherwise varied to fit the requirements of a specific vehicle type in which the power distribution unit 16 is to be applied, making the power distribution unit 16 and in particular the first module 1 highly versatile. In use, the first module 1 and the second module 2 are contiguous along a contact surface 3a of the cooling panel 3 and a contact surface 4a of wall 4 of the second module 2 for forming the power distribution unit 16. Because the two modules are attached to each other along a contact surface, which on the side of the first module 1 is formed by the cooling panel 3, a convenient means is provided for cooling the high voltage electric components of both the first module 1 and of the second module 2. The cooling panel 3 of the first module 1 is provided having a shape and size that makes it suitable for being used to cool high voltage electric components in second modules 2 of varying sizes and shapes. For example, although in this embodiment the cooling panel 3 is shown covering a single side of the first module 1, in alternative embodiments, a cooling panel may be shaped to cover other or multiple sides of the first module. For example, in some embodiments the cooling panel 3 may additionally cover the upper and lower sides of the first module 1 shown in this figure. The second module in those embodiments may then also be alternatively shaped, to be contiguous along the cooling panel when the power distribution unit is assembled. In this case, the second module may have a C-shape, allowing it to be contiguous with all three sides of the cooling panel of the first module. Alternatively, the second module may only need cooling from a cooling panel that covers a smaller surface area. In that case the second module may be attached to the first module along one of the upper or lower sides of the first module shown in this figure. The power distribution unit therefore allows for both horizontal and vertical installations. This further contributes to the versatility of the power distribution unit 16 and the first module 1. The first module 1 is provided with an interface 13 for interconnecting high voltage power circuits and/or low voltage power circuits of the first module 1 and of the second module. The interface 13 may facilitate transmission of communication signals between the two modules for controlling power distribution within the power distribution unit. The interface may comprise interconnection terminals, plugs or sockets for cooperating with complementary parts on the second module, such as to establish the connection between the two modules. Although components that scale in size or number based on the vehicle type in which the power distribution unit is applied would be placed in the second module, it may be necessary for proper functioning of the components to connect with other components, which do not scale in number or size based on the vehicle type in which the power distribution is applied. These other components would be placed in the first module. Components distributed between the first and the second module that nevertheless have to be connected in order to operate can be connected via the interface 13. The interface 13 is provided on the cooling panel 3 of the first module 1 in this embodiment. This way, electric components that facilitate signal travel between the modules are advantageously positioned near or at the cooling panel 3, which provides an efficient means of cooling these components. The cooling panel is provided with cooling channels which have cooling channel inlets and outlets 14-1 - 14-2. These cooling channels may allow a cooling fluid to flow through the cooling panel in order to facilitate the cooling function of the cooling panel 3.

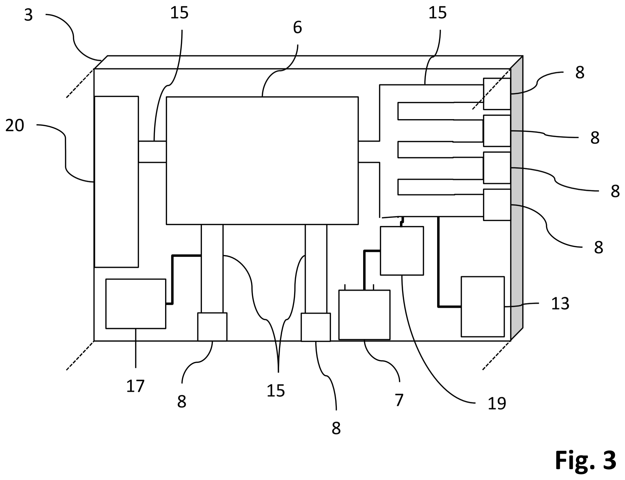

Figure 3 shows an inner face view of a first module 1 of a power distribution unit according to an embodiment of the invention. The first module 1 is provided with high voltage electric components 6, including charging components as shown here. The charging components may for example include combined charging system components (CCS) and/or the charging components may be configured for supporting the Charge de Move (CHAdeMO) standard for fast charging, or another standard such as guóbia̅o/tui̅jiàn. These components are provided in the first module 1 on the cooling panel 3 and are therefore in direct thermal contact therewith. This allows the cooling panel 3 to provide cooling to the components when high currents carried in the high voltage electric components generate heat. High voltage electric components of a second module would be similarly provided on the wall of the second module which in an assembled state of the power distribution unit is contiguous to the cooling panel 3 (see figure 1). These components of the second module may then for example include further charging components, such as MCS (megawatt charging system) components, or on-board charging (OBC) components. The first module 1 in this figure is further provided with low voltage electric components 7, including for example a low voltage connector for being connected to low voltage power circuits 70. The first module may further include an electrical control unit 19. The electrical control unit 19 may be connected to another electrical control unit 190 of the vehicle external to the power distribution unit 16 via e.g. a controller area network (CAN) connector 80. The first module 1 in some embodiments includes electric auxiliary components 20, for being connected to electric auxiliary systems via a connector 8. The electric auxiliary components 20 connected to electric auxiliary systems may for example include vehicle thermal management components, battery thermal management components, or vehicle suspension electric components. These low voltage electric components 7 and electric auxiliary components 20 are likewise provided in the first module 1 on the cooling panel 3, enabling said panel 3 to provide cooling to the components. The first module 1 further comprises a voltage converter 17. The voltage converter 17 serves to convert between high voltages of the high voltage electric components, or of the high voltage systems of the vehicle, and low voltages of low voltage electric components, or of low voltage electric systems of the vehicle. The power distribution unit can provide electrical power to high voltage power circuits, but also to low voltage power circuits, by converting between high and low voltage levels using the voltage converter 17. Furthermore, high voltage electric components placed in the second module may be likewise placed in contact with the contact surface of the second module for bringing them in thermal contact with the cooling panel 3 when the power distribution unit is in an assembled state. The first module 1 in this figure is provided with busbars 15 for delivering electrical current to the high voltage power circuits of the power distribution unit. The busbars 15 connect the high voltage electric components 6 and the connectors 8. The control unit 19, low voltage electric components 7, the interface 13 and the voltage converter 17 are connected to the other circuitry in the first module 1 separately from the busbars 15 in this figure. The busbars 15 of the first module 1 are routed to run along the cooling panel 3, maximizing the proportion of the busbar material that is in thermal contact with the cooling panel 3. By optimizing the thermal connection between the busbars 15 and the cooling panel 3 in this way, the cooling function of the cooling panel 3 in the power distribution unit is also optimized. Busbars in the second module may likewise be routed to run along the contact surface of the second module. Various of the connectors 8 may serve to connect different loads within the first module to systems of the vehicle, or alternatively they may serve to connect loads in the second module to systems of the vehicle. For example, some of the connectors 8 may be high voltage connectors connected to batteries of the vehicle. These connectors may be connected to battery components of the second module. In those embodiments the connectors may be connected to loads in the other module via the interface 13. Interface 13 in other words provides a means in the power distribution unit of facilitating connection between electric components in the second module and electric circuitry of the vehicle outside of the power distribution unit, when the second module comprises an insufficient number of connectors. However, embodiments also exist in which the second module, or both modules, may comprise connectors for this purpose.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Power distribution unit for distributing electrical power in an electrically powered vehicle,
wherein the power distribution unit comprises a first module and a second module, wherein the first module comprises a first number of high voltage electric components electrically connected to one or more high voltage power circuits, wherein the second module comprises a second number of high voltage electric components electrically connected to one or more high voltage power circuits, the first number of high voltage electric components being common to a variety of vehicle types, and the second number of high voltage electric components being specific to a vehicle type,
wherein the first module comprises a cooling panel for dissipating heat from the high voltage electric components, wherein the cooling panel is contiguous to a contact surface of a wall of the second module,
wherein at least a number of the high voltage electric components of the first module are provided on a mounting face of the cooling panel for establishing thermal contact between the high voltage electric components of the first module and the cooling panel, and wherein at least a number of the high voltage electric components of the second module are provided on the wall of the second module for establishing thermal contact between the high voltage electric components of the second module and the cooling panel.

2. Power distribution unit according to claim 1, wherein the first number of high voltage electric components include at least one of: electric auxiliary components and vehicle charging components.

3. Power distribution unit according to claim 2, wherein the high voltage auxiliary components include at least one of a vehicle electric heater, a battery electric heater, an electric air compressor and electric power steering.

4. Power distribution unit according to claim 1 or 2, wherein the second number of high voltage electric components include secondary charging systems such as a megawatt charging system, combined charging systems or ChadeMo systems , specific to the vehicle type.

5. Power distribution unit according to claim 4, wherein the second number of high voltage electric components further include at least one of an AC-onboard charger, a battery pack, an electric drive system, an electric power take off and an electric brake resistor.

6. Power distribution unit according to any of the preceding claims, wherein the first module further comprises a number of low voltage electric components electrically connected to one or more low voltage power circuits.

7. Power distribution unit according to any of the preceding claims, wherein the first module further comprises an electrical control unit, wherein the electrical control unit is configured for controlling the distributing of electrical power in the electrically powered vehicle.

8. Power distribution unit according to any of the preceding claims, wherein the first module is provided with an interface for interconnecting high voltage power circuits and/or low voltage power circuits.

9. Power distribution unit according to claim 8, wherein the interface is provided on the cooling panel, wherein the interface comprises interconnection parts configured for cooperating with complementary interconnection parts of the second module, such as to establish the interconnection between the high voltage power circuits and/or low voltage power circuits of the first module and of the second module.

10. Power distribution unit according to any of the preceding claims, wherein the first module comprises a voltage converter, the voltage converter being configured for converting between a high voltage suitable for the high voltage electric components and a low voltage suitable for low voltage electric components.

11. Power distribution unit according to any of the preceding claims, wherein at least one of the first module and the second module comprises high voltage connectors for electrically connecting the high voltage power circuits of the first module and/or of the second module to the vehicle.

12. Power distribution unit according to any of the preceding claims, wherein the high voltage power circuits comprise busbars in the first module and in the second module, the busbars being configured for delivering electrical current from a power source of the vehicle to the high voltage power circuits,
wherein the busbars are routed in the first module to run along the cooling panel, and wherein the busbars are routed in the second module to run along the contact surface of the second module.

13. Power distribution unit according to any of the preceding claims, wherein the cooling panel comprises one or more channels for permitting a cooling fluid to flow through the cooling panel.
